# EUROPÄISCHE PATENTSCHRIFT

(11) **EP 3 779 233 B1**
(45) Veröffentlichungstag und Bekanntmachung des Hinweises auf die Patenterteilung: **29.06.2022**
(21) Anmeldenummer: 20185369.4
(22) Anmeldetag: 10.07.2020
(51) Int. Cl.: F16F 9/04

(54) **LUFTFEDERBALG UND VERFAHREN ZUR HERSTELLUNG EINES SOLCHEN LUFTFEDERBALGS**
AIR SPRING AND METHOD FOR MANUFACTURING SUCH AN AIR SPRING
SOUFFLET PNEUMATIQUE ET PROCÉDÉ DE FABRICATION D'UN TEL SOUFFLET PNEUMATIQUE

(30) Priorität: 12.08.2019 DE 102019212067
(43) Veröffentlichungstag der Anmeldung: 17.02.2021
(73) Patentinhaber: ContiTech Luftfedersysteme GmbH, 30165 Hannover (DE)
(72) Erfinder: Kranz, Harald, 30419 Hannover (DE)
(74) Vertreter: Continental Corporation

(56) Entgegenhaltungen:
- DE-B- 1 144 545
- FR-A1- 2 717 237

## Beschreibung

Die Erfindung betrifft einen Luftfederbalg einer Luftfeder, welcher mit seinen beiden offenen Enden an Anschlussteilen von zwei gegeneinander beabstandeten Bauteilen dichtend befestigbar ist, und der im montiertem Zustand der Luftfeder einen mit Druckluft gefüllten Arbeitsraum wenigstens teilweise begrenzt, wobei die beiden offenen Enden des Luftfederbalgs als Wülste ausgebildet sind, in denen jeweils ein ringförmiger Kern angeordnet ist, und bei dem die Kerne mit einem in einem elastischen Balgmaterial eingebetteten gewebeförmigen Festigkeitsträger verbunden sind. Außerdem betrifft die Erfindung ein Verfahren zur Herstellung eines solchen Luftfederbalgs, eine Luftfeder mit einem solchen Luftfederbalg sowie eine Schienenfahrzeugfederung mit einer solchen Luftfedereinrichtung.

Luftfedern sind in einer Vielzahl von Ausführungen für Anwendungen in verschiedenen Bereichen bekannt. Eingespannt zwischen Fahrwerk und Karosserie werden sie beispielsweise häufig in Straßen- oder Schienenfahrzeugen eingesetzt, um eine komfortable Federung zu erreichen. Eine derartige Luftfeder weist einen Luftfederbalg auf, an dessen beiden offenen Enden meistens Wülste ausgebildet sind, über die der Luftfederbalg an den Anschlussteilen Luftfederdeckel und Luftfederkolben befestigt ist, wobei der Luftfederbalg einen mit Druckluft gefüllten Arbeitsraum begrenzt. Die Luftfeder steht im Betrieb unter einem inneren Überdruck, wobei der Luftfederbalg bei Belastung und bei Federbewegungen zusammengedrückt beziehungsweise bei Entlastung auseinandergedrückt wird. Ein als Rollbalg ausgebildeter Luftfederbalg rollt bei Federbewegungen unter Bildung einer Rollfalte auf einer Außenkontur des Luftfederkolbens ab. Ein als Faltenbalg ausgebildeter Luftfederbalg bläht sich auf beziehungsweise zieht sich zusammen. Der meistens plattenförmig ausgebildete Luftfederdeckel befindet sich, in der Gebrauchslage der Luftfeder gesehen, üblicherweise oben auf dem Balg, der Luftfederkolben unten. Im Falle einer Fahrgestell-Luftfeder ist der Luftfederdeckel die Schnittstelle zum Fahrzeugrahmen, zum Aufbau oder zum Chassis. Der Luftfederkolben stellt die Schnittstelle zur Fahrzeugachse dar.

Ein Luftfederbalg besteht üblicherweise aus einer Elastomermatrix mit einer äußeren Elastomerschicht und einer inneren Elastomerschicht, welche die Außenseite beziehungsweise die Innenseite der Balgwand des Luftfederbalgs bilden. In der Elastomermatrix ist in der Regel zur Verstärkung ein Festigkeitsträger eingebettet. Der Festigkeitsträger besteht meistens aus mehreren Gewebelagen, deren Fäden in Winkeln den Balg umlaufen, wobei die einzelnen Gewebelagen so übereinanderliegen, dass sich die Fadenwinkel der Gewebelagen geometrisch spiegeln und sich die Fäden im fertigen Balg kreuzen.

An den axialen Balgenden solcher Luftfederbälge befinden sich in der Regel wulstartige Verdickungen mit darin eingebetteten ringförmigen Kernen. Diese Kerne bestehen beispielsweise aus rundem oder rechteckigem Stahldraht und dienen dazu, den Luftfederbalg dort zu klemmen und druckdicht an einem Anschlussteil wie Kolben, Deckel, Felge, Platte oder ähnlichem abzuschließen. Außer der Klemmung des Luftfederbalges dienen die Wülste beziehungsweise die Kerne dazu, die einzelnen Gewebelagen des Festigkeitsträgers zu fixieren und die auf diese Gewebelagen wirkendenden Zugspannungen aufzunehmen.

Bei der Balgherstellung werden die freien Enden der Gewebelagen des Festigkeitsträgers von den Facharbeitern in aufwendiger Handarbeit um den Kern geschlungen und noch wenige Zentimeter weiter auf der Balgwand abgelegt sowie angedrückt. Bei dem anschließenden Vulkanisiervorgang des Rohlings werden die Enden der Gewebelagen bündig mit der Balgwand durch die Elastomerschichten anvulkanisiert.

Die Befestigung beziehungsweise die Einspannung des Luftfederbalges an den Anschlussteilen zum Fahrzeugrahmen beziehungsweise zur Fahrzeugachse muss relativ starke Bewegungen der Luftfederung standhalten. Dabei hat sich die anvulkanisierte Verbindung der freien Enden der Gewebelagen mit der Balgwand nahe am Einspannbereich des Luftfederdeckels oder des Luftfederkolbens als eine Schwachstelle herausgestellt. Diese freien Enden der Gewebelagen können sich später im Einsatz wieder von der Balgwand lösen, wodurch die Festigkeit im besonders stark beanspruchten Einspannbereich beeinträchtigt ist. An den gelösten freien Enden der Gewebelagen können zudem Feuchtigkeit und Partikel in den genannten Arbeitsraum eindringen. In ungünstigen Fällen kann dies zur Undichtigkeit des Balgs oder zum Ablösen des Balgs von einem Anschlussteil und damit zum Totalausfall der betreffenden Luftfeder führen.

Das Problem besteht insbesondere bei Luftfederungen von Schienenfahrzeugen, da diese mehr als Luftfedern von Straßenfahrzeugen neben den normalen axialen auch starke laterale und verdrehende Bewegungen aufnehmen. Dadurch entstehen in den Einspannbereichen der Wülste Relativbewegungen, die zu einem starken Verschleiß der Luftfeder führen können. Ein Lösen der freien Enden der Gewebelagen des Festigkeitsträgers wird insbesondere bei der genannten lateralen Auslenkung des Balges hervorgerufen, da dann durch die unterschiedlichen Relativbewegungen der einzelnen Gummi- und Gewebelagen Spannungsspitzen entstehen, die letztendlich für den Ablösevorgang verantwortlich sind.

Außerdem werden bei Schienenfahrzeugfederungen häufig sogenannte Gürtelbälge eingesetzt. Dies sind als Faltenbälge ausgebildete Luftfederbälge die zur Erhöhung der Stabilität der Luftfeder einen zusätzlichen, meist als Stahlgürtel ausgebildeten, Mittelring aufweisen. Der Mittelring beziehungsweise Stahlgürtel ist zwar durch Bombieren des Rohlings etwa mittig in Axialrichtung am Balg positioniert, jedoch dort nicht sicher fixiert. Daher ist ein zusätzlicher Scheuerschutz notwendig, der aufwendig auf die Balgwand im Bereich des Stahlgürtels aufgebracht werden muss, um eine Beschädigung der Balgwand durch Scheuerbewegungen des Gürtels zu vermeiden.

Die DE 10 2013 108 694 A1 zeigt eine Luftfedereinrichtung eines Schienenfahrzeugs mit einem zwischen Karosserie und Fahrwerksteil angeordnetem Luftfederbalg, welcher mit im Balgmaterial eingebetteten und als Gewebelagen ausgebildeten Festigkeitsträgern versehen ist. Der Luftfederbalg weist an mindestens einem seiner beiden Enden einen Anschluss- und Verstärkungsquerschnitt zur Einspannung des Luftfederbalges an entsprechend ausgebildeten Anschlussteilen von Karosserie und/oder Fahrwerksteil auf. Die Gewebelagen sind im Bereich des Anschluss- und Verstärkungsquerschnitts sowie innerhalb des elastischen Balgmaterials in sich eingerollt ausgebildet und bilden durch die Einrollung einen Wulstring zur Einspannung des Luftfederbalgs. Bei diesem Luftfederbalg werden zwar freie Enden der Gewebelagen und deren Ablösung von der Balgwand vermieden, allerdings wird auf stabilisierende Wulstkerne in Form von Stahldrähten oder dergleichen gänzlich verzichtet.

Zudem sind ein Luftfederbalg sowie ein Verfahren zum Herstellen eines Luftfederbalgs der eingangs genannten Art jeweils aus den Dokumenten DE 11 44 545 B und FR 2 717 237 A1 bekannt.

Vor diesem Hintergrund lag der Erfindung die Aufgabe zugrunde, ein Luftfederbalg eingangs genannter Art vorzustellen, bei dem die beschriebenen Nachteile weitgehend nicht vorhanden sind und der betriebssicher ist. Insbesondere sollen die Enden des Luftfederbalgs starke mehrdimensionale Belastungen aufnehmen können, ohne dass der Balg vorzeitig verschleißt. Außerdem soll ein Verfahren zur Herstellung eines solchen Luftfederbalgs vorgestellt werden. Insbesondere sollen ein solcher Luftfederbalg und eine damit ausgebildete Luftfeder für den Einsatz in Luftfedersystemen von Schienenfahrzeugen geeignet sein.

Die Lösung dieser Aufgaben ergibt sich aus den Merkmalen der unabhängigen Ansprüche, während vorteilhafte Ausgestaltungen und Weiterbildungen der Erfindung den abhängigen Ansprüchen entnehmbar sind.

Der Erfindung lag die Erkenntnis zugrunde, dass die gestiegenen Belastungen und Komfortansprüche an Luftfedern, insbesondere bei Schienenfahrzeugen, einer verbesserten, sicheren und verschleißfesten Gestaltung des Luftfederbalgs bedürfen. Dies kann konstruktiv durch eine modifizierte Anordnung der Gewebelagen eines Festigkeitsträgers des Luftfederbalgs unter Einbeziehung von in endseitigen Wülsten des Luftfederbalgs eingebetteten Kernen ermöglicht werden.

Die Erfindung betrifft demnach einen Luftfederbalg einer Luftfeder, welcher mit seinen beiden offenen Enden an Anschlussteilen von zwei gegeneinander beabstandeten Bauteilen dichtend befestigbar ist, und der im montiertem Zustand der Luftfeder einen mit Druckluft gefüllten Arbeitsraum wenigstens teilweise begrenzt, wobei die beiden offenen Enden des Luftfederbalgs als Wülste ausgebildet sind, in denen jeweils ein ringförmiger Kern angeordnet ist, und bei dem die Kerne mit einem in einem elastischen Balgmaterial eingebetteten gewebeförmigen Festigkeitsträger verbunden sind.

Zur Lösung der gestellten Aufgabe hinsichtlich der Schaffung eines Luftfederbalgs sieht die Erfindung vor, dass der Festigkeitsträger über die ganze Balgwand des Luftfederbalgs auf sich selbst umgeschlagen ist, wodurch die Kerne in den Wülsten vollständig von dem Festigkeitsträger umschlossen sind, und dass die beiden freien Enden des Festigkeitsträgers zusammengeführt und miteinander verbunden sind.

Der Fachmann auf diesem Technikgebiet verwendet für einen Vorgang, bei dem ein Gewebe oder dergleichen auf sich selbst umgeschlagen wird, den Begriff "Umbucken".

Ein Festigkeitsträger eines Luftfederbalgs wird in der Regel aus mehreren Gewebelagen aufgebaut. Bisher wurden die nur Enden des Festigkeitsträgers um die Kerne der Wülste des Luftfederbalgs herumgelegt und im Einspannbereich des Balgs an die Balgwand angedrückt, welches nach einem langdauernden Betrieb zu einem Ablösen der freien Enden bei starken lateralen Bewegungen des Luftfederbalgs führen könnte.

Im Unterschied dazu werden gemäß der Erfindung nicht die Enden des Festigkeitsträgers, sondern der Festigkeitsträger im Ganzen auf voller Länge der Balgwand unter Einbeziehung der Wulstkerne umgebuckt. Der Festigkeitsträger kann dabei beide Wulstkerne von radial außen nach radial innen oder umgekehrt von radial innen nach radial außen umschlingen.

Alternativ dazu ist es möglich, dass der Festigkeitsträger einen der Wulstkerne von radial außen nach radial innen und den anderen Wulstkerne von radial innen nach radial außen umschlingt.

Der Festigkeitsträger weist zum Umbucken etwa die doppelte Länge im Vergleich zu einem herkömmlichen Festigkeitsträger, zumindest die doppelte Länge der Balgwand, auf. Durch das vollständige Umbucken des Festigkeitsträgers wird ein Luftfederbalg mit einem in sich vollständig geschlossenen Festigkeitsträger geschaffen, der starke laterale und verdrehende Bewegungen dauerhaft verschleißfrei aufnehmen kann. Ein Aufreißen der Gewebelagen in den besonders belasteten Einspannbereichen des Luftfederbalgs wird zuverlässig vermieden.

Für Luftfedereinrichtungen von Schienenfahrzeugen, die besonders starken lateralen Bewegungen ausgesetzt sind, sind keine zusätzlichen konstruktiven Maßnahmen zur Verstärkung der Luftfedern erforderlich. Dadurch können die Herstellungskosten von Luftfedern für Schienenfahrzeuge verringert und gleichzeitig deren Haltbarkeit verlängert werden.

Das Verbinden der freien Enden des Festigkeitsträgers kann im einfachsten Fall dadurch realisiert sein, dass sich diese freien Enden des Festigkeitsträgers zumindest ein Stück weit überdecken.

Gemäß einer anderen Weiterbildung eines Luftfederbalgs mit den Merkmalen der Erfindung kann vorgesehen sein, dass der Festigkeitsträger aus zwei aufeinanderliegenden Gewebelagen besteht, welche aus einer einzigen, auf sich selbst umgeschlagenen Gewebeplatte erzeugt sind, wobei die Fäden der zwei Gewebelagen gekreuzt zueinander die Balgwand umlaufen.

Demnach kann der Festigkeitsträger aus nur einer einlagigen Gewebeplatte doppelter Länge erzeugt werden, die im Bereich der Wülste umgebuckt wird. Dadurch entsteht eine zweite Gewebelage, deren Fäden im geometrisch gespiegelten Winkel zu der ersten Gewebelage den Balg umlaufen, wobei jedoch keine zusätzlichen freien Enden der zweiten Gewebelagen entstehen. Dadurch wird ein sehr flexibler dünner und dennoch sehr belastbarer Luftfederbalg zur Verfügung gestellt. Ein solcher Luftfederbalg weist aufgrund seiner vergleichsweise geringen Wandstärke ein besonders komfortables Federungsverhalten auf. Das vom Fachmann als "Harshness-Effekt" bezeichnete harte Federungsverhalten bei bestimmten Schwingungsfrequenzen und/oder Schwingungsamplituden, welcher häufig bei eher steifen Luftfedern beobachtet wird, kann weitgehend vermieden werden.

Alternativ dazu kann der Festigkeitsträger aus einer zweilagigen Gewebeplatte in doppelter Länge der Balgwand bestehen, so dass im fertig verarbeiteten Balg vier Gewebelagen übereinander liegen. Dadurch entsteht ein besonders hoch belastbarer und besonders haltbarer Luftfederbalg, gegebenenfalls mit einer etwas größeren Wandstärke und geringen Einbußen hinsichtlich des Federungskomforts.

Gemäß einer weiteren Ausführungsform der Erfindung kann vorgesehen sein, dass die beiden freien Enden des Festigkeitsträgers auf der halben Länge der Balgwand zusammengeführt sind. Demnach ist die Nahtstelle der beiden Enden des Festigkeitsträgers beziehungsweise deren Verbindungsbereich maximal entfernt von den beiden offenen Enden des Luftfederbalgs angeordnet und befindet sich damit maximal entfernt von den durch den Festigkeitsträger umschlossenen Wulstkernen der Wülste, die sich in den am stärksten belasteten Einspannbereichen des Luftfederbalgs an den Anschlussteilen der Luftfeder befinden.

Gemäß einer anderen Weiterbildung des erfindungsgemäßen Luftfederbalgs kann vorgesehen sein, dass bei einem als Faltenbalg ausgebildeten Luftfederbalg der an diesem angeordnete Balggürtel mittels des auf sich selbst umgeschlagenen Festigkeitsträgers fixiert ist. Demnach kann der Balggürtel beim Umschlagen des Festigkeitsträgers mit eingebunden und am Balg fixiert werden, so das unerwünschte Eigenbewegungen des Gürtels, welche die Federungs- und Stabilitätseigenschaften der Luftfeder ungünstig beeinflussen können, vermieden werden. Zugleich kann durch den umgebuckten Festigkeitsträger ein Scheuerschutz geschaffen werden, der ein Scheuern des Balggürtels auf der Balgwand bei den Federbewegungen zuverlässig verhindert.

Zur Herstellung eines erfindungsgemäßen Luftfederbalgs ist ein besonderes Herstellverfahren notwendig. Die Erfindung betrifft daher auch ein Verfahren zur Herstellung eines Luftfederbalgs, welcher mit seinen beiden offenen Enden an Anschlussteilen von zwei gegeneinander beabstandeten Bauteilen dichtend befestigbar ist, und der im montiertem Zustand der Luftfeder einen mit Druckluft gefüllten Arbeitsraum wenigstens teilweise begrenzt, wobei die beiden offenen Enden des Luftfederbalgs als Wülste ausgebildet sind, in denen jeweils ein ringförmiger Kern angeordnet ist, und bei dem die Kerne mit einem in einem elastischen Balgmaterial eingebetteten gewebeförmigen Festigkeitsträger verbunden sind. Zur Lösung der verfahrensbezogenen Aufgabe sieht die Erfindung vor, dass zunächst der Festigkeitsträger an einem Balgrohling über die ganze Balgwand auf sich selbst umgeschlagen wird, wobei die Kerne in den Wülsten vollständig umschlossen sowie die beiden freien Enden des Festigkeitsträgers an einer Nahtstelle zusammengeführt und miteinander verbunden werden, und dass der Balgrohling anschließend vulkanisiert wird.

Durch dieses Verfahren wird ein Luftfederbalg geschaffen, der einen homogenen Balgaufbau aufweist und zugleich hoch belastbar ist. Das Umbucken des Festigkeitsträgers kann in einem automatisierten Fertigungsprozess erfolgen. Dadurch können Fertigungskosten eingespart werden.

Die Erfindung betrifft auch eine Luftfeder, mit einem Luftfederbalg, welcher gemäß einem der Vorrichtungsansprüche beziehungsweise den gerade genannten Merkmalen aufgebaut und nach dem Verfahrensanspruch hergestellt ist, sowie ein Schienenfahrzeug mit mindestens einer solchen Luftfeder.

Die Erfindung wird nachstehend anhand von einem in der beigefügten Zeichnung dargestellten Ausführungsbeispiel näher erläutert. In der Zeichnung zeigt
Fig. 1 einen hälftigen Axialschnitt durch eine Luftfeder mit einem Luftfederbalg gemäß der Erfindung, und
Fig. 2 einen hälftigen Axialschnitt durch eine Luftfeder mit einem herkömmlichen Luftfederbalg gemäß dem Stand der Technik.

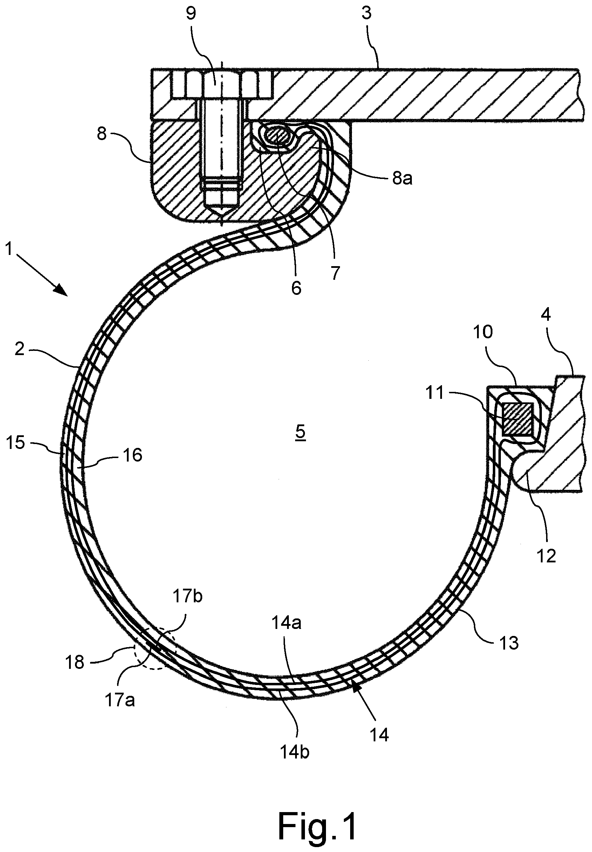

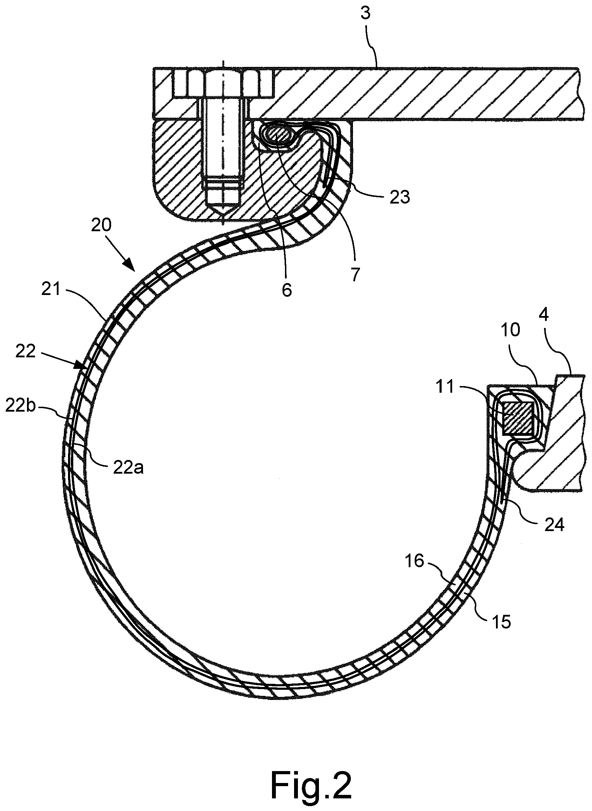

Die beiden Figuren 1 und 2 zeigen demnach im hälftigen Längsschnitt jeweils eine Luftfeder, die in einem hier nicht näher dargestellten Fahrwerk eines Schienenfahrzeugs zwischen einer Karosserie eines Waggons und einem Fahrschemel des Fahrwerks an der Unterseite des Waggons eingespannt sind. Eine solche Luftfeder kann mit den gleichen Vorteilen selbstverständlich auch in einem Kraftfahrzeug, beispielsweise einem Nutzfahrzeug eingebaut sein.

Der Aufbau und die Funktionsweise einer Luftfeder sind an sich bekannt. Beispielsweise sei dazu auf die DE 10 2017 201 446 A1 sowie auf die bereits eingangs erwähnte DE 10 2013 108 694 A1 verwiesen. Die Figuren beschränken sich daher zur Vereinfachung jeweils lediglich auf einen Ausschnitt eines Axialschnitts durch eine im Wesentlichen zylindrische Luftfeder, welche mit ihrer Symmetrieachse mit jeweils einem Anschlussteil senkrecht zwischen Fahrwerk und Karosserie eingespannt ist.

Demnach weist eine in Fig. 1 schematisch vereinfacht dargestellte Luftfeder 1 gemäß der Erfindung einen Luftfederbalg 2 auf, der mit seinem in Gebrauchslage von oben gesehenen ersten offenen Ende an einem karosserieseitigen ersten Anschlussteil 3, hier ein plattenförmiger Luftfederdeckel, und mit seinem in Gebrauchslage zweiten offenen Ende an einem fahrwerkseitigen zweiten Anschlussteil 4, hier ein zylindrischer Luftfederkolben, dichtend befestigt ist. Das karosserieseitige erste Anschlussteil 3 wird im Folgenden Luftfederdeckel 3 genannt, das fahrwerkseitige zweite Anschlussteil 4 wird im Folgenden Luftfederkolben 4 genannt.

Der Luftfederbalg 2 ist aus einem Elastomer hergestellt und begrenzt einen mit Druckluft gefüllten Arbeitsraum 5 wenigstens teilweise. Der Arbeitsraum 5 dient dazu, Kräften, welche zwischen dem Luftfederdeckel 3 und dem Luftfederkolben 4 wirken, durch eine Komprimierung eines von dem Arbeitsraum 5 eingeschlossenen Luftvolumens entgegenzuwirken. Wird die Schienenfahrzeugfederung also in ihrer Vertikalrichtung mit einer Kraft beaufschlagt, wirken auf den Luftfederdeckel 3 und den Luftfederkolben 4 entsprechend entgegengesetzte Kräfte, so dass Luft in dem Arbeitsraum 5 komprimiert wird. Dies wiederum verursacht ein radiales Aufblähen des Luftfederbalgs 2 und/oder ein Abrollen des Luftfederbalgs 2 an dem Luftfederkolben 4, so dass es zu einer entsprechenden Reaktionskraft kommt, die einem vertikalen Zusammendrücken des Luftfederbalgs 2 entgegenwirkt.

Der Luftfederbalg 2 weist an seinem luftfederdeckelseitigen ersten offenen Ende einen als umlaufende Verdickung ausgebildeten ersten Wulst 6 auf. Der erste Wulst 6 weist vorliegend die Form eines an der Deckelseite abgeflachten Torus auf, in den ein ringförmiger erster Kern 7 eingelegt ist. Der erste Kern 7 kann beispielsweise ein im Querschnitt kreisförmiger oder ellipsenförmiger Volldrahtkern sein. Alternativ dazu sind auch dehnbare oder nichtdehnbare andere Materialien, wie beispielsweise Kunststoffe oder Elastomere als Kernmaterialien möglich. Außerdem kann der Kern 7 als geschlossener oder offener Ring ausgebildet sein.

Der so verstärkte obere Rand des Luftfederbalgs 2 wird mittels eines metallischen Verschlussrings 8 an dem Luftfederdeckel 3 festgeklemmt. Dazu weist der Verschlussring 8 radial innen eine im Querschnitt den Rand des Luftfederbalgs 2 von außen umgreifende, nach oben ausgerichtete Nase 8a auf. Außerdem weist der Verschlussring 8 Gewindebohrungen auf, in die durch Bohrungen im Luftfederdeckel 3 gesteckte Schrauben 9 eingeschraubt sind.

Der Luftfederbalg 2 weist außerdem an seinem luftfederkolbenseitigen zweiten offenen Ende einen als umlaufende Verdickung ausgebildeten zweiten Wulst 10 auf. Der zweite Wulst 10 weist vorliegend im Wesentlichen die Form eines im Querschnitt rechteckigen Rings auf, der an seiner zu dem Luftfederkolben 4 zugewandten Außenseite konisch abgeschrägt ist und an einer entsprechend konisch geformten, umlaufenden Mantelfläche des Luftfederkolbens 4 formschlüssig anliegt. Außerdem sitzt der Wulst 10 auf einer an dem Luftfederkolben 4 von der konisch geformten Mantelfläche übergehend ausgebildeten umlaufenden Felge 12 auf. Dadurch ist die Luftfeder 1 in Längsrichtung fixiert und gesichert. In den luftfederkolbenseitigen Wulst 10 ist ein ringförmiger zweiter Kern 11 mit einem quadratischen Querschnitt eingelegt, welcher den unteren Rand des Luftfederbalgs 2 verstärkt.

Die Balgwand 13 des Luftfederbalgs 2 besteht aus einer Elastomermatrix, die mit einem in das Elastomer eingelegten Gewebe als Festigkeitsträger 14 verstärkt ist. Der Festigkeitsträger 14 ist radial zwischen einer radial äußeren Elastomerschicht 15 und einer radial inneren Elastomerschicht 16 in die Elastomermatrix eingebettet. Der Festigkeitsträger 14 ist einerseits an dem luftfederdeckelseitigen ersten Kern 7 und andererseits an dem luftfederkolbenseitigen zweiten Kern 11 verankert.

Gemäß der Erfindung ist der Festigkeitsträger 14 unter Einbeziehung der beiden Wulstkerne 7, 11 auf der vollen Balgwandlänge auf sich selbst umgeschlagen. Die beiden Wulstkerne 7, 11 sind dazu jeweils vollständig von dem Festigkeitsträger 14 umschlossen. Ein gegebenenfalls fertigungsbedingt unvermeidbarer schmaler Umschlingungsspalt an den Wulstkernen zwischen einem vorlaufenden und einem rücklaufenden Abschnitt des Festigkeitsträgers 14 bleibt hierbei beschreibungsbezogen idealisierend unberücksichtigt.

Der Festigkeitsträger 14 besteht im vorliegenden Beispiel aus einer einzigen Gewebeplatte. Durch das Umbucken der Gewebeplatte beziehungsweise des Festigkeitsträgers 14 über die gesamte Balgwand 13 werden zwei aufeinanderliegende Gewebelagen 14a, 14b erzeugt. Die Gewebeplatte besteht dabei aus Fäden, die bei der Einbettung in die Elastomermatrix mit einem Fadenwinkel die Balgwand 13 umlaufen. Durch das Umbucken wird der Fadenwinkel geometrisch gespiegelt, so dass die Fäden der radial innenliegende ersten Gewebelage 14a und der radial außenliegenden zweiten Gewebelage 14b überkreuz in der Balgwand 13 umlaufen, wodurch die Elastomermatrix zusätzlich verstärkt ist.

Eine der beiden Gewebelagen 14a, 14b, vorliegend die radial äußere Gewebelage 14b, weist die beiden freien Enden 17a, 17b des Festigkeitsträgers 14 auf. Diese beiden Enden 17a, 17b sind an einer Nahtstelle 18 zusammengeführt und miteinander verbunden. Dieses Verbinden ist beispielswiese dadurch realisiert, dass die beiden Enden 17a, 17b radial übereinanderliegend einander ein Stück weit überdecken. Die Nahtstelle 18 befindet sich jeweils beabstandet zu dem ersten Wulst 6 und dem zweiten Wulst 10, vorliegend etwa auf der halben Länge der Balgwand 13. Im fertigen, vulkanisierten Zustand weist der Luftfederbalg 2 somit einen in sich geschlossenen vollständig umgebuckten Festigkeitsträger auf.

Fig. 2 zeigt zum Vergleich eine Luftfeder 20 mit einem Luftfederbalg 21 gemäß dem Stand der Technik. Im Unterschied zu dem erfindungsgemäßen Festigkeitsträger 14 gemäß Fig. 1 weist der herkömmliche Luftfederbalg 21 gemäß Fig. 2 einen Festigkeitsträger 22 auf, der nicht in sich geschlossen in der Balgwand angeordnet ist. Der herkömmliche Festigkeitsträger 22 weist zwei separate, übereinander liegende Gewebeplatten 22a, 22b auf, deren erstes freies Ende 23 und deren zweites freies Ende 24 um den ersten Kern 7 beziehungsweise um den zweiten Kern 11 geschlungen sind, wobei die jeweils zwei benachbarten Gewebeplattenenden zu spitzen Enden zusammengedrückt sind. Die beiden freien Enden 23, 24 des Festigkeitsträgers 22 sind nahe an dem ersten Wulst 6 beziehungsweise nahe an dem zweiten Wulst 10 in der Elastomermatrix angeordnet.

Das Verstärkungsgewebe ist dadurch insbesondere im Hinblick auf die starken lateralen Belastungen, der eine Schienenfahrzeugfederung ausgesetzt ist, nur ungenügend fixiert. Es besteht die Gefahr, dass das Gewebe in den oberen und unteren Einspannbereichen der Luftfeder 20 aufreißt und die freien Enden 23, 24 der Gewebeplatten 22a, 22b sich von der äußeren Elastomerschicht 15 und/oder von der inneren Elastomerschicht 16 ablösen. Dadurch kann die Verbindung der Wulstkerne 7, 11 mit dem Festigkeitsträger 22 instabil werden oder gänzlich verlorengehen, so dass das Gewebe der Gewebeplatten 22a, 22b die Zugspannungen im Betrieb nicht mehr oder nur begrenzt aufnehmen kann. Die Festigkeit und Belastbarkeit der Luftfeder 20 wird dadurch beeinträchtigt. Bei dem Luftfederbalg 2 gemäß der Erfindung (Fig. 1), mit dem über den ganzen Balg vollständig umgebuckten Festigkeitsträger 14, besteht diese Gefahr hingegen nicht.

### Bezugszeichenliste

- 1: Luftfeder
- 2: Luftfederbalg
- 3: Erstes Anschlussteil, Luftfederdeckel
- 4: Zweites Anschlussteil, Luftfederkolben
- 5: Arbeitsraum, Druckraum des Luftfederbalgs
- 6: Erster Wulst, in Gebrauchslage oberer Wulst
- 7: Kern des ersten Wulstes
- 8: Verschlussring
- 8a: Nase an dem Verschlussring
- 9: Schraube zur Befestigung des Verschlussrings
- 10: Zweiter Wulst, in Gebrauchslage unterer Wulst
- 11: Kern des zweiten Wulstes
- 12: Felge am Luftfederkolben
- 13: Balgwand des Luftfederbalgs
- 14: Festigkeitsträger, Gewebe
- 14a: Erste Gewebelage
- 14b: Zweite Gewebelage
- 15: Äußere Elastomerschicht
- 16: Innere Elastomerschicht
- 17a: Erstes freies Ende des Festigkeitsträgers
- 17b: Zweites freies Ende des Festigkeitsträgers
- 18: Nahtstelle der Enden des Festigkeitsträgers
- 20: Luftfeder (Stand der Technik)
- 21: Luftfederbalg (Stand der Technik)
- 22: Festigkeitsträger (Stand der Technik)
- 22a: Erste Gewebeplatte (Stand der Technik)
- 22b: Zweite Gewebeplatte (Stand der Technik)
- 23: Erstes freies Ende des Festigkeitsträgers (Stand der Technik)
- 24: Erstes freies Ende des Festigkeitsträgers (Stand der Technik)

## Patentansprüche

1. Luftfederbalg (2) einer Luftfeder (1), welcher mit seinen beiden offenen Enden an Anschlussteilen (3, 4) von zwei gegeneinander beabstandeten Bauteilen dichtend befestigbar ist, und der im montiertem Zustand der Luftfeder (1) einen mit Druckluft gefüllten Arbeitsraum (5) wenigstens teilweise begrenzt, wobei die beiden offenen Enden des Luftfederbalgs (2) als Wülste (6, 10) ausgebildet sind, in denen jeweils ein ringförmiger Kern (7, 11) angeordnet ist, und bei dem die Kerne (7, 10) mit einem in einem elastischen Balgmaterial eingebetteten gewebeförmigen Festigkeitsträger (14) verbunden sind, **dadurch gekennzeichnet, dass** der Festigkeitsträger (14) über die ganze Balgwand (13) des Luftfederbalgs (2) auf sich selbst umgeschlagen ist, wodurch die Kerne (7, 11) in den Wülsten (6, 10) vollständig von dem Festigkeitsträger (14) umschlossen sind, und dass die beiden freien Enden (17a, 17b) des Festigkeitsträgers (14) zusammengeführt und miteinander verbunden sind.

2. Luftfederbalg nach Anspruch 1, **dadurch gekennzeichnet, dass** sich die freien Enden (17a, 17b) des Festigkeitsträgers (14) zumindest ein Stück weit überdecken.

3. Luftfederbalg nach Anspruch 1 oder 2, **dadurch gekennzeichnet, dass** der Festigkeitsträger (14) aus zwei aufeinanderliegenden Gewebelagen (14a, 14b) besteht, welche aus einer einzigen, auf sich selbst umgeschlagenen Gewebeplatte erzeugt sind, wobei die Fäden der zwei Gewebelagen (14a, 14b) gekreuzt zueinander die Balgwand (13) umlaufen.

4. Luftfederbalg nach einem der Ansprüche 1 bis 3, **dadurch gekennzeichnet, dass** die beiden freien Enden (17a, 17b) des Festigkeitsträgers (14) auf der halben Länge der Balgwand (13) zusammengeführt sind.

5. Luftfederbalg nach einem der Ansprüche 1 bis 4, **dadurch gekennzeichnet, dass** bei einem als Faltenbalg ausgebildeten Luftfederbalg der an diesem angeordnete Balggürtel mittels des auf sich selbst umgeschlagenen Festigkeitsträgers (14) fixiert ist.

6. Verfahren zur Herstellung eines Luftfederbalgs (2), welcher mit seinen beiden offenen Enden an Anschlussteilen (3, 4) von zwei gegeneinander beabstandeten Bauteilen dichtend befestigbar ist, und der im montiertem Zustand der Luftfeder (1) einen mit Druckluft gefüllten Arbeitsraum (5) wenigstens teilweise begrenzt, wobei die beiden offenen Enden des Luftfederbalgs (2) als Wülste (6, 10) ausgebildet sind, in denen jeweils ein ringförmiger Kern (7, 11) angeordnet ist, und bei dem die Kerne (7, 10) mit einem in einem elastischen Balgmaterial eingebetteten gewebeförmigen Festigkeitsträger (14) verbunden sind, **dadurch gekennzeichnet, dass** zunächst der Festigkeitsträger (14) an einem Balgrohling über die ganze Balgwand (13) auf sich selbst umgeschlagen wird, wobei die Kerne (7, 11) in den Wülsten (6, 10) vollständig umschlossen sowie die beiden freien Enden (17a, 17b) des Festigkeitsträgers (14) an einer Nahtstelle (18) zusammengeführt und miteinander verbunden werden, und dass der Balgrohling anschließend vulkanisiert wird.

7. Luftfeder (1), mit einem Luftfederbalg (2), welcher gemäß einem der Vorrichtungsansprüche aufgebaut und nach dem Verfahrensanspruch hergestellt ist.

8. Schienenfahrzeug, mit mindestens einer Luftfeder (1), welche einen Luftfederbalg (2) aufweist, der gemäß einem der Vorrichtungsansprüche aufgebaut und nach dem Verfahrensanspruch hergestellt ist.

## Claims

1. Air spring bellows (2) of an air spring (1), which air spring bellows (2) can be fastened sealingly by way of its two open ends to connector parts (3, 4) of two components which are spaced apart from one another, and which air spring bellows (2), in the mounted state of the air spring (1), at least partially delimits a working space (5) which is filled with compressed air, the two open ends of the air spring bellows (2) being configured as beads (6, 10), in which in each case one annular core (7, 11) is arranged, and in the case of which air spring bellows (2) the cores (7, 10) are connected to a woven-fabric reinforcement material (14) which is embedded in an elastic bellows material, **characterized in that** the reinforcement material (14) is turned over on itself over the entire bellows wall (13) of the air spring bellows (2), as a result of which the cores (7, 11) in the beads (6, 10) are enclosed completely by the reinforcement material (14), and **in that** the two free ends (17a, 17b) of the reinforcement material (14) are brought together and connected to one another.

2. Air spring bellows according to Claim 1, **characterized in that** the free ends (17a, 17b) of the reinforcement material (14) overlap at least to some extent.

3. Air spring bellows according to Claim 1 or 2, **characterized in that** the reinforcement material (14) consists of two woven fabric layers (14a, 14b) which lie on one another and are produced from a single woven fabric sheet which is turned over on itself, the threads of the two woven fabric layers (14a, 14b) running around the bellows wall (13) such that they are crossed with respect to one another.

4. Air spring bellows according to one of Claims 1 to 3, **characterized in that** the two free ends (17a, 17b) of the reinforcement material (14) are brought together over half the length of the bellows wall (13).

5. Air spring bellows according to one of Claims 1 to 4, **characterized in that**, in the case of an air spring bellows which is configured as a folding bellows, the bellows belt which is arranged on it is fixed by means of the reinforcement material (14) which is turned over on itself.

6. Method for producing an air spring bellows (2) which can be fastened sealingly by way of its two open ends to connector parts (3, 4) of two components which are spaced apart from one another, and which air spring bellows (2), in the mounted state of the air spring (1), at least partially delimits a working space (5) which is filled with compressed air, the two open ends of the air spring bellows (2) being configured as beads (6, 10), in which in each case one annular core (7, 11) is arranged, and in the case of which air spring bellows (2) the cores (7, 10) are connected to a woven-fabric reinforcement material (14) which is embedded in an elastic bellows material, **characterized in that** the reinforcement material (14) is first of all turned over on itself on a bellows blank over the entire bellows wall (13), the cores (7, 11) in the beads (6, 10) being enclosed completely, and the two free ends (17a, 17b) of the reinforcement material (14) being brought together and connected to one another at a seam point (18), and **in that** the bellows blank is subsequently vulcanized.

7. Air spring (1), with an air spring bellows (2) which is constructed according to one of the device claims and is produced in accordance with the method claim.

8. Rail vehicle, with at least one air spring (1) which has an air spring bellows (2) which is constructed according to one of the device claims and is produced in accordance with the method claim.

## Revendications

1. Soufflet de suspension pneumatique (2) d'une suspension pneumatique (1), qui peut être fixé de manière étanche par ses deux extrémités ouvertes à des pièces de raccordement (3, 4) de deux composants espacés l'un de l'autre, et qui, à l'état monté de la suspension pneumatique (1), délimite au moins partiellement une chambre de travail (5) remplie d'air comprimé, les deux extrémités ouvertes du soufflet de suspension pneumatique (2) étant réalisées sous forme de bourrelets (6, 10), dans lesquels est agencé respectivement un noyau annulaire (7, 11), et dans lequel les noyaux (7, 10) sont reliés à un support de résistance (14) en forme de tissu, incorporé dans un matériau de soufflet élastique, **caractérisé en ce que** le support de résistance (14) est rabattu sur lui-même sur l'ensemble de la paroi de soufflet (13) du soufflet de suspension pneumatique (2), les noyaux (7, 11) dans les bourrelets (6, 10) étant ainsi entièrement entourés par le support de résistance (14), et **en ce que** les deux extrémités libres (17a, 17b) du support de résistance (14) sont réunies et reliées entre elles.

2. Soufflet de suspension pneumatique selon la revendication 1, **caractérisé en ce que** les extrémités libres (17a, 17b) du support de résistance (14) se chevauchent au moins sur une certaine distance.

3. Soufflet de suspension pneumatique selon la revendication 1 ou 2, **caractérisé en ce que** le support de résistance (14) est constitué de deux couches de tissu (14a, 14b) superposées, qui sont produites à partir d'une seule plaque de tissu rabattue sur elle-même, les fils des deux couches de tissu (14a, 14b) faisant le tour de la paroi de soufflet (13) en se croisant entre eux.

4. Soufflet de suspension pneumatique selon l'une quelconque des revendications 1 à 3, **caractérisé en ce que** les deux extrémités libres (17a, 17b) du support de résistance (14) sont réunies sur la moitié de la longueur de la paroi de soufflet (13).

5. Soufflet de suspension pneumatique selon l'une quelconque des revendications 1 à 4, **caractérisé en ce que**, dans le cas d'un soufflet de suspension pneumatique réalisé sous forme de soufflet plissé, la ceinture de soufflet agencée sur celui-ci est fixée au moyen du support de résistance (14) rabattu sur lui-même.

6. Procédé de fabrication d'un soufflet de suspension pneumatique (2), qui peut être fixé de manière étanche par ses deux extrémités ouvertes à des pièces de raccordement (3, 4) de deux composants espacés l'un de l'autre et qui, à l'état monté de la suspension pneumatique (1), délimite au moins partiellement un espace de travail (5) rempli d'air comprimé, les deux extrémités ouvertes du soufflet de suspension pneumatique (2) étant réalisées sous forme de bourrelets (6, 10), dans desquels est agencé respectivement un noyau annulaire (7, 11), et dans lequel les noyaux (7, 10) sont reliés à un support de résistance (14) en forme de tissu, incorporé dans un matériau de soufflet élastique, **caractérisé en ce que** le support de résistance (14) est tout d'abord rabattu sur lui-même sur une ébauche de soufflet, sur l'ensemble de la paroi de soufflet (13), les noyaux (7, 11) dans les bourrelets (6, 10) étant entièrement entourés et les deux extrémités libres (17a, 17b) du support de résistance (14) étant réunies et reliées entre elles au niveau d'un point de jonction (18), et **en ce que** l'ébauche de soufflet est ensuite vulcanisée.

7. Suspension pneumatique (1), comprenant un soufflet de suspension pneumatique (2), qui est construit selon l'une quelconque des revendications de dispositif et fabriqué selon la revendication de procédé.

8. Véhicule ferroviaire, comprenant au moins une suspension pneumatique (1), qui présente un soufflet de suspension pneumatique (2), qui est construit selon l'une quelconque des revendications de dispositif et fabriqué selon la revendication de procédé.
